# EUROPÄISCHE PATENTSCHRIFT

(11) **EP 1 719 597 B1**
(45) Veröffentlichungstag und Bekanntmachung des Hinweises auf die Patenterteilung: **26.09.2007**
(21) Anmeldenummer: 06008359.9
(22) Anmeldetag: 22.04.2006
(51) Int. Cl.: B27N 3/08, B29C 33/64

(54) **Verfahren zur Herstellung von Formkörpern aus Cellulose enthaltenden Materialien**
Method of manufacturing articles from materials containing cellulose
Procédé pour la fabrication d'objets en matériaux contenant de la cellulose

(30) Priorität: 06.05.2005 DE 102005021059
(43) Veröffentlichungstag der Anmeldung: 08.11.2006
(73) Patentinhaber: Goldschmidt GmbH, 45127 Essen (DE)
(72) Erfinder: Boinowitz, Tammo, Dr., 45131 Essen (DE); Henning, Torsten, Dr., 19057 Schwerin (DE); Lammerting, Helmut, 58456 Witten (DE)

(56) Entgegenhaltungen:
- EP-A- 0 207 192
- EP-A- 0 597 347
- EP-A- 0 846 539
- DE-C1- 19 738 192

## Beschreibung

Gegenstand der Erfindung ist ein Verfahren zur Herstellung von kompakten cellulosehaltigen Formkörpern durch Umsetzung von gegebenenfalls modifizierten organischen Polyisocyanaten mit Cellulose, insbesondere Lignocellulose, in Gegenwart von Formtrennmitteln in einem offenen oder geschlossenen Formwerkzeug, wobei als Formtrennmittel Aminopropylgruppen enthaltende Siloxanverbindungen verwendet werden und die Verwendung der Aminopropylgruppen enthaltenden Siloxanverbindungen als Formtrennmittel für Formkörper aus Polyisocyanat-Celluloseadditionsprodukten.

Die Herstellung komprimierter, geformter als "Composites" bezeichneter Formteile aus Holzstückchen, -fasern oder -partikel wie etwa OSB (oriented strand board) - Platten, Spanplatten, Faserplatten, Sperrholz aber auch Korkplatten sowie Formkörpern aus Flachs, Stroh oder anderen cellulosehaltigen Werkstoffen, mit Isocyanatbindern, gegebenenfalls in Gegenwart oder Abwesenheit von Katalysatoren, Hilfsmitteln und/oder Zusatzstoffen in einem offenen oder geschlossenen Formwerkzeug ist bekannt aus zahlreichen Patent- und Literaturveröffentlichungen.

Bei diesen Prozessen sind Temperaturen von 90 bis 270 °C nötig, um die Reaktion der Isocyanatbinder mit dem cellulosehaltigen Material zu gewährleisten und eine Verformung der Werkstoffe zu der gewünschten Endform wie beispielsweise Bretter oder Platten zu ermöglichen.

Obgleich die Herstellung von kompakten Cellulose/Isocyanat-Formkörpern eine große technische Bedeutung erlangt hat, weisen die beschriebenen Verfahren, z.B. wegen der hervorragenden Adhäsion von Polyurethanen zu anderen Werkstoffen, auch technische Mängel auf. Nachteilig ist insbesondere, dass die Formkörper an den Formwerkzeugen haften und daher schwer entformbar sind, was häufig zur Beschädigung der Formkörper, insbesondere deren Oberfläche, führt. Zur Vermeidung dieses Nachteils werden in der Regel polierte, metallische Formwerkzeuge verwendet und/oder Trennmittel mitverwendet.

Diese Formtrennmittel werden entweder in die härtbare Cellulose-Isocyanatmischung als interne Trennmittel eingesetzt oder die Formwerkzeuginnenflächen werden vor der Herstellung der Formkörper mit einem gleichmäßigem Überzug aus äußeren Trennmitteln versehen, wofür verschiedene spritz- und sprühtechnische sowie Walzenauftragsverfahren (DE-10 337 594) aus dem Stand der Technik bekannt sind. Es besteht auch die Möglichkeit, die Oberfläche der Holzspäne (strands) mit Formtrennmittel zu beschichten. Dies erfolgt ebenfalls durch Spühauftrag.

Als konventionelle interne oder externe Trennmittel werden beispielsweise Fettsäuren und deren Metallsalze (WO-A-03/072324, WO-A-02/36268), polymere Fettsäuren (EP-A-0 269 869), carboxyfunktionalisierte Siloxane (EP-B-0 129 430), Wachse (EP-B-0 046 014), speziell Esterwachs (EP-B-0 057 502), oxidierter Wachs (WO-A-00/53381) oder Polyolefinwachs (WO-A-98/00464), Polyolefinwachs in Kombination mit Fettsäuren (WO-A-01/58998) oder schließlich Fettsäuren oder Wachssäuren in Kombination mit Polysiloxanen verwendet, die mit einer organisch gebundenen aktiven Wasserstoffgruppe modifiziert sind und in der Lage sind, mit Isocyanat zu reagieren (WO-A-03/008164).

Solche konventionellen Trennmittel zeigen den Nachteil, dass die fertigen Formkörper an der Oberfläche dunkle Verfärbungen zeigen, die die optische Wertigkeit stark beeinträchtigen. Weiterhin zeigen die Pressbleche häufig schwarze Aufbaurückstände. Dies liegt daran, dass die konventionell eingesetzten Trennmittel bei den im Prozess verwendeten Temperaturen nicht thermisch oder oxidativ stabil sind und/oder dazu neigen, auf den Metallblechen harte, meist schwarze feste Aufbaurückstände erzeugen.

Diese Aufbaurückstände können sich auch wieder auf den hergestellten Formkörper ablagern und auch auf diese Weise zu dunklen Verfärbungen und/oder Unregelmäßigkeiten in deren Oberflächenstruktur führen oder, insbesondere bei siliconhaltigen Trennmitteln, zu erheblichen Lackierproblemen führen. Teilweise ist dadurch eine Nachbehandlung wie Abschleifen der Oberfläche nötig.

Die zur Zeit industriell eingesetzten Trennmittel zum Entformen von Formteilen enthalten üblicherweise in einem Träger dispergierte trennwirksame Substanzen.

Als Träger werden in der Regel organische Lösungsmittel oder Wasser verwendet. Dabei dienen diese nicht nur als Träger für die trennaktiven Werkstoffe und als Lösungsmittel für weitere Additive, sondern auch zum Einstellen einer optimalen Konzentration, als Hilfsmittel beim Benetzen und Verlauf und bei der Bildung des Trennmittelfilmes sowie zur Beeinflussung der Polyurethan-Formteiloberfläche. Betriebssicherheit, Wirtschaftlichkeit und ökologische Unbedenklichkeit sind weitere Anforderungen an den Träger.

Das stark gestiegene Interesse am Umweltschutz und die damit einhergehenden verschärften gesetzlichen Bestimmungen führen zu dem Bestreben, flüchtige organische Lösungsmittel (sog. VOCs) auf ein vertretbares Minimum zu reduzieren.

Die zur Zeit industriell eingesetzten Trennmittel zum Entformen von Formteilen enthalten üblicherweise in einem Träger dispergierte trennwirksame Substanzen, wie bspw. Öle, Wachse, Silicone und/oder Seifen.

Die EP-A-0 207 192 beschreibt Siliconharze als semipermanente Trennmittel für die Pressbleche, welche auf den Pressblechen aushärten und mehrmalige Entformungen ermöglichen. Diese Schrift erwähnt aminofunktionalisierte Siloxane in Kombination mit Siliconharzen und wonach das Trennmittel eine gewisse Verträglichkeit mit der Harzmatrix erhalten soll, die eine Einbindung in die Matrix gewährleistet. Die bereits beschriebenen Probleme der Bildung dunkler Aufbaurückstände auf den Pressblechen werden jedoch auch mit diesem Trennmittel nicht behoben.

Die DE-C-19 738 192 beschreibt Trennmittel für Formen zur Herstellung von Formkörpern aus Kunststoffen, aufgebaut auf flüchtigen Polysiloxanen der Kettenlängen 7 bis 13, in denen 0,1 bis 5,0 Gew.-% eines γ-Aminopropylgruppen enthaltenden Polysiloxans mitverwendet wird. Das Trennmittel wird bei Raumtemperatur oder Temperaturen bis 50 °C eingesetzt. Diese Trennmittel können jedoch für die vorliegende Anwendung nicht verwendet werden, da die flüchtigen Polysiloxane bei den hohen Anwendungstemperaturen von 180 bis zu 270 °C nicht mehr als Trennmittel wirken können und/oder die Bildung eines gleichmäßigen Trennmittelfilms auf den Pressblechen nicht zulassen. Weiterhin war zu befürchten, dass bei der Verwendung amingruppenhaltiger Polysiloxane Verfärbungen auftreten.

Aminopropylgruppen enthaltende Organopolysiloxane sind als Trennmittel zur Herstellung von aus Polyurethan geformten Gegenständen aus der EP-A-846539 bekannt.

Eine Aufgabe der vorliegenden Erfindung war es daher, Trennmittel zu finden, die bei den hohen Temperaturen bis 270 °C, bevorzugt 180 bis 240 °C, stabil, nichtflüchtig sind und nicht thermisch oder oxidativ zu dunkel gefärbten Verbindungen abbauen und weiterhin keine festen Aufbaurückstände bilden.

Eine weitere Aufgabe war es, Trennmittel zu finden, die auch im Falle der Ablösung von der Metallpresse auf dem Formkörper verbleiben können, ohne dass sich dort Verfärbungen bilden oder die gegebenenfalls weiteren Bearbeitungsschritte (Lackierbarkeit) beeinträchtigt werden.

Überraschenderweise wurde nun gefunden, dass sich aminofunktionialisierte Siloxane hervorragend als Trennmittel eignen und in der Anwendung bei der Herstellung (ligno)cellulosehaltiger Produkte keine Verfärbungen an der Oberfläche der Formkörper hervorrufen und keine festen Aufbaurückstände auf den Pressblechen bilden.

Ein Gegenstand der Erfindung ist daher ein Verfahren zur Herstellung von kompakten cellulosehaltigen Formkörpern durch Umsetzung von gegebenenfalls modifizierten organischen Polyisocyanaten mit Cellulose, insbesondere Lignocellulose, in Gegenwart von Formtrennmitteln in einem offenen oder geschlossenen Formwerkzeug, welches dadurch gekennzeichnet ist, dass als Formtrennmittel Aminopropylgruppen enthaltende Siloxanverbindungen der allgemeinen Formel (I) verwendet werden, 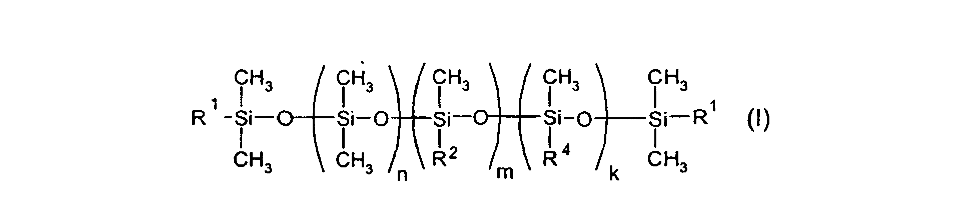 worin bedeuten
- R¹: CH₃ und/oder R²,
- R²: -(CH₂)ₓ-NH-R³ und/oder -(O)_{y}-(CH₂)ₓ-NH-R^{3'},
- R³, R^{3'}: unabhängig voneinander H oder -(CH₂)ₓ-NH₂ sein können,
- R⁴: -(CH₂)ₓ-NH-(CH₂CH₂-O)_{z}-R⁵ mit
- R⁵: Aryl- oder Alkylrest,
- n: 50 bis 1.000, bevorzugt 100 bis 500, insbesondere 100 bis 200
- m: 0 bis 20, bevorzugt 0 bis 5 mit dem Verhältnis m : n = 0 bis 0,4 bevorzugt 0,01 bis 0,1,
- k: 0 bis 20, bevorzugt 0 bis 5,
- x: 1 bis 20, bevorzugt 1 bis 5,
- y: 0 oder 1,
- z: 1 bis 20, bevorzugt 1 bis 10,
mit der Maßgabe, dass mindestens ein aminofunktionalisierter Rest vorhanden ist.

Ein weiterer Gegenstand der Erfindung ist die Verwendung von Aminopropylgruppen enthaltenden Siloxanverbindungen als Formtrennmittel für Formkörper aus Polyisocyanat-Celluloseadditionsprodukten.

In einer weiteren bevorzugten Form können die aminofunktionalisierten Siloxane zusätzlich so funktionalisiert sein, dass sie selbstemulgierbar sind. Das ist in der Regel dann der Fall, wenn in der allgemeinen Formel (I) k die Bedeutung ≥ 1 hat, vorzugweise > 2.

In diesem Fall kann auf weitere nicht trennaktive Substanzen, die bei den hohen Anwendungstemperaturen zu Verfärbungen führen könnten, verzichtet werden.

Die erfindungsgemäßen aminofunktionalisierten Siloxane werden nach den im Stand der Technik bekannten Verfahren hergestellt und können in dieser Form ohne weitere Aufbereitungsschritte erfindungsgemäß verwendet werden.

Diese aminofunktionalisierten Siloxane können in reiner Form als Trennmittel eingesetzt werden. Da sie aber bereits in sehr geringen Konzentrationen hervorragende Trennergebnisse zeigen, können sie auch gemischt werden in Mengen von 1 bis 98 Gew.-%, bevorzugt 1 bis 20 Gew.-%, besonders bevorzugt 1 bis 5 Gew.-% mit organischen und anorganischen Lösungsmitteln.

Organische Lösungsmittel sind weniger bevorzugt, da sie niedrige Zündpunkte zeigen und sich im Bereich der Anwendungstemperaturen entzünden können. Besser geeignet sind cyclische oder lineare Siloxane, wobei nur solche Siloxane in Frage kommen, deren Zündpunkt oberhalb der verwendeten Anwendungstemperaturen liegt.

Als anorganisches Lösungsmittel oder Trägermedium wird vorzugsweise Wasser in Mengen von 2 bis 99 Gew.-%, bevorzugt 80 bis 99 Gew.-%, besonders bevorzugt 95 bis 99 Gew.-% verwendet.

Als übliche Hilfs- und Zusatzstoffe können eingesetzt werden:

### Anionische Emulgatoren wie:

Alkylethercarboxylate, Alkylsulfate, Fettalkoholethoxylatethersulfate, alpha-Olefinsulfonate, Alkylphosphate, Alkylpolyetherphosphate, Alkylsulfosuccinate; nichtionische Emulgatoren wie Fettalkohole, ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester; kationische Emulgatoren wie sauer gestellte Alkyldimethylamine, quaternäre Stickstoffverbindungen; schließlich zwitterionische Tenside oder Kombinationen der Emulgatoren in Mengen von 0,1 bis 10 Gew.-%, bevorzugt 0,5 bis 6 Gew.-%.

Als Katalysatoren solche, die typischerweise für die Polyurethanreaktion verwendet werden. Beispielsweise Lewis-Säuren wie Zinnverbindungen oder Lewis-Basen wie tertiäre Amine.

Als Viskositätsmodifizierer typische Verdicker wie Polyelektrolytverdicker.

Als Konservierungsmittel Bakterizide und Fungizide.

Weiterhin handelsübliche Antioxidantien.

Zusätze zur Beeinflussung der Leitfähigkeit wie antistatisch wirkende Zusätze oder die Leitfähigkeit erhöhende Zusätze.

In einer weiteren bevorzugten Ausführungsform liegt das Trennmittel in Form einer Emulsion vor.

Um eine erfindungsgemäße Emulsion herzustellen, kann jede bekannte Methode verwendet werden, bevorzugt geht man so vor, dass der Emulgator mit aminofunktionalisiertem Siloxan vorgelegt wird, scherkraftreich ein Teil des Wassers eingetragen wird, und dann das restliche Wasser scherkraftarm zugegeben wird.

Die erfindungsgemäßen Mischungen, bevorzugt wässrige Emulsionen, können vor der Verwendung weiter verdünnt werden auf Anwendungskonzentrationenen bezogen auf das Trennmittel von 2 bis 20 Gew.-%.

Die Erfindung betrifft weiter die Verwendung der beschriebenen Trennmittel bei der Herstellung lignocellulosehaltiger Produkte, die unter Verwendung von Isocyanatbindern nach einem der üblichen technischen Verfahren hergestellt werden.

Klassischerweise wird Lignocellulosematerial in Faser- oder Partikelform vorgelegt, dann mit Isocyanatbinder versetzt und dann in einer Metallpresse geformt. Die beschriebenen Trennmittel werden vor dem Pressvorgang auf die Metallplatten oder Metallwalzen aufgesprüht wie etwa in WO-A-02/36268 beschrieben. Schließlich wird das gepresste Material von der Metallpresse entformt.

### Beispiele:

Die folgenden Beispiele dienen zur näheren Beschreibung der Erfindung, ohne sie darauf einzuschränken.

Liste der eingesetzten Substanzen:
Genapol^{®} X 050 = Tridecylalkoholpolyglykolether mit 5 Mol Ethylenoxid, Hersteller Clariant
Genapol^{®} O 300 = Oleylalkoholpolyglykolether mit 30 Mol Ethylenoxid, Hersteller Clariant
Emulsogen^{®} PN Extra = Mischung aus Fettalkoholpolyglykolethern, Hersteller Clariant
Licowachs^{®} KPE = emulgatorhaltiger Montanesterwachs, Hersteller Clariant

### Herstellung der Trennmittelemulsionen:

### Trennmittel 1:

40 g Genapol^{®} X 050, 40 g Genapol^{®} O 300 und 400 g aminofunktionalisiertes Siloxan der Formel 1 mit n = 80, m = 1, R¹ = CH₃ und R² = -(CH₂)ₓ-NH-R³ mit x = 3 und R³ = H wurden unter starkem Rühren mit 50 g Wasser vermischt und dann mit 5.470 g Wasser zur fertigen Emulsion verdünnt.

### Trennmittel 2:

40 g Genapol^{®} X 050, 40 g Genapol^{®} O 300 und 600 g aminofunktionalisiertes Siloxan der Formel 1 mit n = 140, m = 2, R¹ = CH₃ und R² = -(CH₂)ₓ-NH-R³ mit x = 3 und R³ = H wurden unter starkem Rühren mit 50 g Wasser vermischt und dann mit 5.270 g Wasser zur fertigen Emulsion verdünnt.

### Trennmittel 3:

40 g Genapol^{®} X 050, 40 g Genapol^{®} O 300 und 800 g aminofunktionalisiertes Siloxan der Formel 1 mit n = 200, m = 3, R¹ = CH₃ und R² = -(CH₂)ₓ-NH-R³ mit x = 3 und R³ = H wurden unter starkem Rühren mit 50 g Wasser vermischt und dann mit 5.070 g Wasser zur fertigen Emulsion verdünnt.

### Vergleichsbeispiel A:

Als Vergleichstrennmittel A wurden 80 g Emulsogen^{®} PN Extra mit 400 g Licowachs^{®} KPE bei erhöhter Temperatur unter starkem Rühren mit 50 g Wasser vermischt und dann mit 5.470 g Wasser zur fertigen Emulsion verdünnt.

### Vergleichsbeispiel B (Beispiel Nr. 2 aus DE-C-19 738 192):

Als Vergleichstrennmittel B wurden 240 g Genapol^{®} X 050 und 1.080 g Polysiloxan mit 10 bis 15 Einheiten und 3 g aminofunktionalisiertes Siloxan analog Formel 1 mit n = 100, m = 2, R¹ = CH₃ und R² = -(CH₂)ₓ-NH-R³ mit x = 3 und R³ = H wurden unter starkem Rühren mit 50 g Wasser vermischt und dann mit 4.617 g Wasser zur fertigen Emulsion verdünnt.

### Trennmittelversuche:

Die Trennmittelemulsionen wurden mittels einer Düse in Mengen von 30 g/m² auf die als Metallbänder gestalteten Metallpressen aufgetragen. Holzstückchen wurden mit rohem Diphenylmethandiisocyanat (MDI) versetzt und bei einer Temperatur von 240 °C gepresst. Die Bandgeschwindigkeit betrug 30 m/min, die Bahnbreite 3 m, die Plattenstärke betrug 20 mm.

### Bewertung der Trennmittelversuche:

| Trennmittel | Aussehen der Holzplatten | Metallbänder |
|---|---|---|
| 1 | hell | ohne schwarze Aufbaurückstände, leichte Reinigung möglich |
| 2 | hell | ohne schwarze Aufbaurückstände, leichte Reinigung möglich |
| 3 | hell | ohne schwarze Aufbaurückstände, leichte Reinigung möglich |
| A | generell dunkler, dunkle Flecken | schwarze Aufbaurückstände, Reinigung aufwendig |
| B | Trennmittel nicht verwendbar, Trennfilm reisst bei Anwendung ab (Polysiloxan verflüchtigt sich) | - |

## Patentansprüche

1. Verfahren zur Herstellung von kompakten cellulosehaltigen Formkörpern durch Umsetzung von gegebenenfalls modifizierten organischen Polyisocyanaten mit Cellulose, insbesondere Lignocellulose, in Gegenwart von Formtrennmitteln in einem offenen oder geschlossenen Formwerkzeug, **dadurch gekennzeichnet, dass** als Formtrennmittel Aminopropylgruppen enthaltende Siloxanverbindungen der allgemeinen Formel (I) verwendet werden 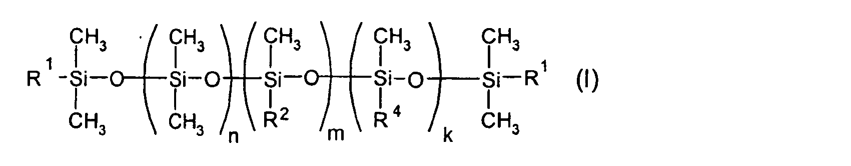 worin bedeuten
R¹ CH₃ und/oder R²,
R² -(CH₂)ₓ-NH-R³ und/oder -(O)_{y}-(CH₂)ₓ-NH-R^{3'},
R³, R^{3'} unabhängig voneinander H oder -(CH₂)ₓ-NH₂ sein können,
R⁴ -(CH₂)ₓ-NH-(CH₂-CH₂-O)_{z}-R⁵ mit
R⁵ Aryl- oder Alkylrest,
n 50 bis 1.000,
m 0 bis 20, mit dem Verhältnis m : n = 0 bis 0,4
k 0 bis 20,
x 1 bis 20,
y 0 oder 1,
z 1 bis 20,
mit der Maßgabe, dass mindestens ein aminofunktionalisierter Rest vorhanden ist.

2. Verfahren gemäß Anspruch 1, **dadurch gekennzeichnet, dass** als Formtrennmittel Aminopropylgruppen enthaltende Siloxanverbindungen der allgemeinen Formel (I) verwendet werden in der R¹ = CH₃ ist.

3. Verfahren gemäß Anspruch 1 oder 2, **dadurch gekennzeichnet, dass** x = 1 bis 5 ist.

4. Verfahren gemäß mindestens einem der Ansprüche 1 bis 3, **dadurch gekennzeichnet, dass** n = 100 bis 500 ist.

5. Verfahren gemäß mindestens einem der Ansprüche 1 bis 4, **dadurch gekennzeichnet, dass** das Verhältnis von m : n = 0,01 bis 0,1 ist.

6. Verfahren gemäß mindestens einem der Ansprüche 1 bis 5, **dadurch gekennzeichnet, dass** als Trennmittel eine wässrige Emulsion, enthaltend 1 bis 99 Gew.-% mindestens einer der Verbindungen der allgemeinen Formel (I) verwendet wird.

7. Verwendung der Aminopropylgruppen enthaltenden Siloxanverbindungen gemäß mindestens einem der Ansprüche 1 bis 5 als Formtrennmittel für Formkörper aus Polyisocyanat-Cellulose-Additionsprodukten.

8. Verwendung der Aminopropylgruppen enthaltenden Siloxanverbindungen gemäß Anspruch 7 als Formtrennmittel für Formkörper aus Polyisocyanat-Cellulose-Additionsprodukten.

## Claims

1. Process for the production of compact cellulose-containing moldings by reacting optionally modified organic polyisocyanates with cellulose, in particular lignocellulose, in the presence of mold release agents in an open or closed mold, **characterized in that** the mold release agents used are siloxane compounds containing aminopropyl groups and of the general formula (I) 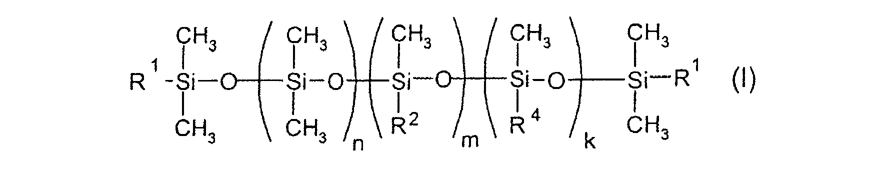 in which
R¹ is CH₃ and/or R²,
R² is -(CH₂)ₓ-NH-R³ and/or -(O)_{y}-(CH₂)ₓ-NH-R^{3'},
R³ and R^{3'}, independently of one another, may be H or -(CH₂)ₓ-NH₂,
R⁴ is - (CH₂)ₓ-NH-(CH₂-CH₂-O)_{z}-R⁵ where
R⁵ is an aryl or alkyl radical
n is from 50 to 1000,
m is from 0 to 20, with the ratio m : n = 0 to 0.4,
k is from 0 to 20,
x is from 1 to 20,
y is 0 or 1,
z is from 1 to 20,
with the proviso that at least one amino-functionalized radical is present.

2. Process according to Claim 1, **characterized in that** the mold release agents used are siloxane compounds containing aminopropyl groups and of the general formula (I) in which R¹ = CH₃.

3. Process according to Claim 1 or 2, **characterized in that** x is from 1 to 5.

4. Process according to at least one of Claims 1 to 3, **characterized in that** n is from 100 to 500.

5. Process according to at least one of Claims 1 to 4, **characterized in that** the ratio of m : n is from 0.01 to 0.1.

6. Process according to at least one of Claims 1 to 5, **characterized in that** the mold release agent used is an aqueous emulsion containing from 1 to 99% by weight of at least one of the compounds of the general formula (I).

7. Use of the siloxane compounds containing aminopropyl groups, according to at least one of Claims 1 to 5, as mold release agents for moldings comprising polyisocyanate-cellulose adducts.

8. Use of the siloxane compounds containing aminopropyl groups, according to Claim 7, as mold release agents for moldings comprising polyisocyanate-cellulose adducts.

## Revendications

1. Procédé de fabrication de corps moulés compacts contenant de la cellulose par réaction de polyisocyanates organiques éventuellement modifiés avec de la cellulose, en particulier de la lignocellulose, en présence d'agents de démoulage dans un outil de formage ouvert ou fermé, **caractérisé en ce qu'**on utilise comme agents de démoulage des composés de siloxane contenant des groupes aminopropyle de formule générale (I) 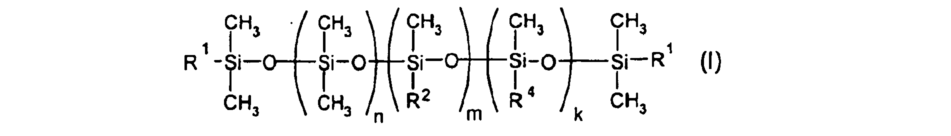 dans laquelle
R¹ est CH₃ et/ou R²,
R² -(CH₂)ₓ-NH-R³ et/ou -(O)_{y}-(CH₂)ₓ-NH-R³,
R³, R^{3'} peuvent être indépendamment l'un de l'autre H ou -(CH₂)ₓ-NH₂,
R⁴ -(CH₂)ₓ-NH-(CH₂-CH₂-O)_{z}-R⁵ avec
R⁵ un radical aryle ou alkyle,
n 50 à 1000,
m 0 à 20, avec le rapport m:n=0 à 0,4
k 0 à 20,
x 1 à 20,
y 0 ou 1,
z 1 à 20,
étant entendu qu'au moins un radical à fonctionnalité amino est présent.

2. Procédé selon la revendication 1, **caractérisé en ce qu'**on utilise comme agents de démoulage des composés de siloxane contenant des groupes aminopropyle de formule générale (I), dans laquelle R¹ =CH₃.

3. Procédé selon la revendication 1 ou 2, **caractérisé en ce que** x=1 à 5.

4. Procédé selon au moins une des revendications 1 à 3, **caractérisé en ce que** n=100 à 500.

5. Procédé selon au moins l'une des revendications 1 à 4, **caractérisé en ce que** le rapport de m:n=0,01 à 0,1.

6. Procédé selon au moins l'une des revendications 1 à 5, **caractérisé en ce qu'**on utilise comme agent de démoulage une émulsion aqueuse contenant de 1 à 99% en poids d'au moins un des composés de formule générale (I).

7. Utilisation des composés de siloxane contenant des groupes aminopropyle selon au moins l'une des revendications 1 à 5 comme agents de démoulage pour des corps moulés constitués de polyisocyanate-cellulose-produits d'addition.

8. Utilisation des composés de siloxane contenant des groupes aminopropyle selon la revendication 7 comme agents de démoulage pour des corps moulés constitués de polyisocyanate-cellulose-produits d'addition.
